(19) Europäisches Patentamt
European Patent Office
Office européen des brevets

(11) **EP 1 826 959 B1**

(12) **EUROPEAN PATENT SPECIFICATION**

(45) Date of publication and mention
of the grant of the patent:
**15.04.2009 Bulletin 2009/16**

(51) Int Cl.:
***H04L 12/56*** (2006.01)

(21) Application number: **06008873.9**

(22) Date of filing: **28.04.2006**

(54) **Apparatus for absorbing fluctuations in the packet transmission rate of a communications network**

Vorrichtung zur Absorption von Schwankungen in der Paketübertragungsrate in einem Kommunikationsnetzwerk

Appareil pour l'absorption de variations du débit de transmission de paquets dans un réseau de communication

(84) Designated Contracting States:
**DE FR GB**

(30) Priority: **27.02.2006 JP 2006050789**

(43) Date of publication of application:
**29.08.2007 Bulletin 2007/35**

(73) Proprietor: **Fujitsu Ltd.**
**Kawasaki-shi, Kanagawa 211-8588 (JP)**

(72) Inventors:
• **Tanaka, Masakiyo**
**Kawasaki-shi, Kanagawa 211-8588 (JP)**
• **Otani, Takeshi**
**Kawasaki-shi, Kanagawa 211-8588 (JP)**

• **Suzuki, Masanao**
**Kawasaki-shi, Kanagawa 211-8588 (JP)**
• **Makiuchi, Takashi,**
**c/o Fujitsu Kyushu Network Tech. Ltd.**
**Fukuoka-shi, Fukuoka 814-8588 (JP)**

(74) Representative: **HOFFMANN EITLE**
**Patent- und Rechtsanwälte**
**Arabellastrasse 4**
**81925 München (DE)**

(56) References cited:
**US-A1- 2005 041 644      US-A1- 2005 157 708**
**US-A1- 2005 238 013**

**Description**

BACKGROUND OF THE INVENTION

1. Field of the Invention

The present invention relates to a voice packet communication system, and relates to a fluctuation absorbing buffer apparatus controlling fluctuation in transmission delay occurring in voice packet communication, and a packet voice communication apparatus employing it.

2. Description of the Related Art

Recently, against a background of a spread of a flat-rate broadband circuit of ADSL, optical communication or such, VoIP (Voice over Internet Protocol) transmitting voice in a form of a packet with the use of the Internet, has sharply spread as a device for achieving a reduction of the communication cost.
Different from a conventional fixed phone system, a voice packet communication system such as VoIP has not a special band ensured therefor. Accordingly, a fluctuation may occur in a voice packet transmission delay time due to a communication network congestion or such. When voice packets arrive irregularly due to the transmission delay fluctuation, a voice interruption may occur since no voice to reproduce exists on the receiving side.
Therefore, commonly, as diclosed in US 2005/238013, a method is applied in which, as shown in FIG. 1, a 'reproduction buffer' for temporarily storing received voice packets is provided in VoIP, and reproduction is actually started after a predetermined amount of voice packets have been stored there. In the specification of the present application, this predetermined amount to store is referred to as a 'reproduction reference value'.
As long as the transmission fluctuation is smaller than the reproduction reference value, no voice interruption, caused by a lack of voice to reproduce (depletion from the buffer), occurs. That is, a resistance against the fluctuation is enhanced as the reproduction reference value is increased.
However, when the reproduction reference value is increased, the delay increases accordingly. As a result, in consideration for a real-time performance of speech, the reproduction reference value cannot be increased much. As a result, for a case where the network condition is troublesome and a transmission delay fluctuates more than the reproduction reference value, the reproduction buffer may not be sufficient to absorb the fluctuation, voice packets in the buffer may be depleted and a voice interruption may occur. For solving such a problem of transmission delay fluctuation, the following technology may be applied:
That is, as a voice quality improvement technology for solving the problem due to the depletion from the buffer occurring due to a fluctuation exceeding the reproduction reference value, Packet Loss Concealment (PLC) technology disclosed by, for example, Patent Document 1 (Untied States Patents Nos. 6,973,425, 6,961,697 and 6,952,668 to Kapilow) or such may be applied. This technology uses a fact that voice has a periodicity. According to the technology, a pitch (periodicity) is extracted from voice reproduced in the past, the past voice is repeated based on the extracted pitch, and thus, the voice can be interpolated without causing an unconformable feeling. By applying this technology for a case where voice packets in the reproduction buffer are depleted, the voice interruption can be avoided and the voice quality degradation can be reduced even when a fluctuation exceeding the reproduction reference value occurs.
Patent Document 2 (Japanese Patent No. 3397191) discloses a technology in which the reproduction reference value is dynamically changed in response to a transmission delay time fluctuation, and the delay fluctuation is absorbed. First, upon arrival of a packet, a transmission delay time fluctuation and voice characteristics (as to whether voice is actually included or not there) are examined. The transmission delay time fluctuation is obtained from a transmission time attached to the packet and a received time at which the data is received. This also disclosed in US 2005/157708.
Next, the thus-obtained fluctuation is compared with a predetermined threshold, and, when the fluctuation is larger than a threshold, the no-voice packet in the reproduction buffer is repeatedly reproduced, the reproduction reference value is increased in such a manner that the voice quality is not affected, and thus, the fluctuation absorbing resistance is strengthened.
Instead of repeating the no-voice packet as mentioned above, a voice packet having a high periodicity may be repeated. Further, when the fluctuation is very large, the packet may be repeated without regard to the voice characteristics. Further, when the fluctuation is small on the contrary, the no-voice packet may be deleted, the reproduction reference value may be reduced, and thus real-time performance for speech may be improved.

SUMMARY OF THE INVENTION

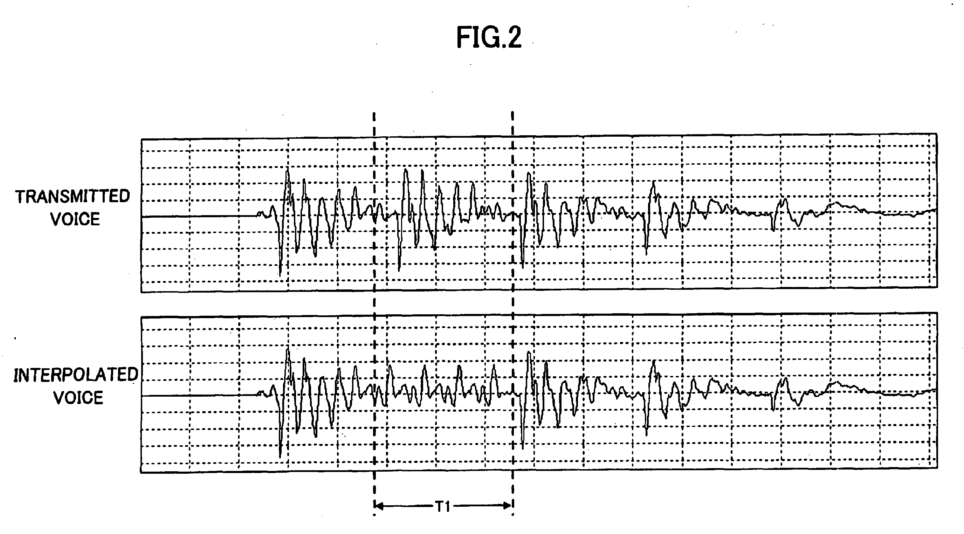

The above-described method of Patent Document 1 is advantageous when voice has a high periodicity. However, for a part of consonant having a low periodicity, as shown in FIG. 2, an unnatural pitch may be extracted and repeated, and thus, an abnormal noise may occur.

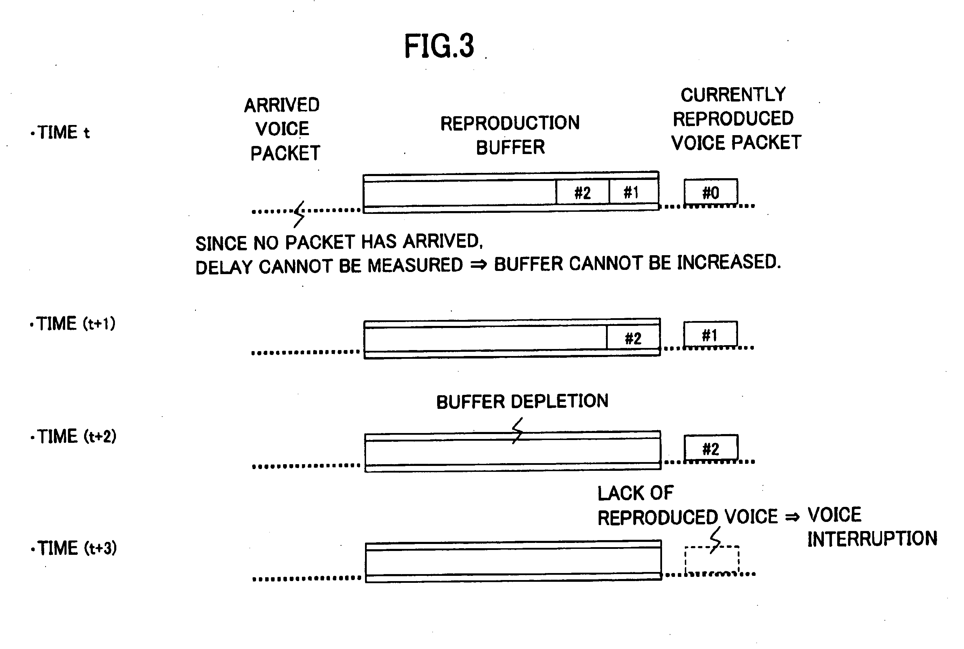

In the method of Patent Document 2, determination for increasing the reproduction reference value is made based on the received packet transmission delay time fluctuation. That is, processing of increasing the reproduction reference value cannot be made until a packet actually arrives. For example, when a large delay occurs suddenly as shown in FIG. 3, voice packets in the reproduction buffer may be depleted, and a voice interruption may occur.

The present invention has been devised in consideration of the above-mentioned point, and an object of the present invention is to provide a fluctuation absorbing buffer apparatus in which a voice degradation due to an unnatural interpolation does not occur, a voice interruption may not occur even when a sudden delay occurs, and the delay fluctuation may be absorbed.

According to one mode of carrying out the present invention, a fluctuation absorbing buffer apparatus configured to absorb, by means of a reproduction buffer, a transmission delay time fluctuation occurring in a voice packet communication system, has:

a packet state notifying part carrying out decrease notification when the number of voice packets stored in the reproduction buffer decreases;
a voice determining part carrying out a determination as to whether or not voice exists in the voice packet stored in the reproduction buffer; and
a voice reproduction control part repeatedly reproducing the voice packet determined as not having voice when the decrease is notified by said packet state notifying part.

Accordingly, a voice degradation due to an unnatural interpolation may not occur, a voice interruption may not occur even when a sudden delay occurs, and thus, a delay fluctuation may be absorbed.

In the above-mentioned fluctuation absorbing buffer apparatus, the voice reproduction control part may repeat reproduction of the no-voice packet during a period in which the packet state notifying part notifies the decrease.

Further, in the fluctuation absorbing buffer apparatus, the voice reproduction control part may insert the no-voice packet after a voice packet determined as including no voice.

Further, in the fluctuation absorbing buffer apparatus, the packet state notifying part may carry out the decrease notification when the number of voice packets stored in the reproduction buffer decreases to be not more than a threshold.

Further, in the fluctuation absorbing buffer apparatus, the voice packet determining part may determine that the packet has no voice when the packet has power not more than a reference value.

Further, in the fluctuation absorbing buffer apparatus, the voice packet determining part may determine whether the voice packet has a constancy not less than a predetermined threshold, as well as determining whether or not the packet has voice; and
the voice reproduction control part may repeat reproduction of the packet determined as having no voice or the packet having the constancy more than the predetermined threshold.

Further, in the fluctuation absorbing buffer apparatus, the voice packet determining part may determine whether the voice packet has a maximum constancy, as well as determining whether or not the packet has voice; and
the voice reproduction control part may repeat reproduction of the packet determined as having no voice or the packet having the maximum constancy.

Further, in the fluctuation absorbing buffer apparatus, when there are no packets determined as having no voice, the voice reproduction control part may repeat reproduction of the voice packet having the constancy more than the predetermined threshold or the voice packet having the maximum constancy.

Further, in the fluctuation absorbing buffer apparatus, the voice reproduction control part may insert interpolation voice generated according to a Packet Loss Concealment algorithm after the packet having the constancy more than the predetermined threshold or the packet having the maximum constancy.

Further, in the fluctuation absorbing buffer apparatus, the voice packet determining part may use a maximum value of an autocorrelation function as the constancy of the voice packet.

Further, in the fluctuation absorbing buffer apparatus, the voice packet determining part may use a magnitude of a pitch gain of the voice packet as the constancy of the voice packet.

Further, in the fluctuation absorbing buffer apparatus, the packet state notifying part may carry out the decrease notification when the number of the voice packets stored in the reproduction buffer decreases, and carry out the increase notification when the number of the voice packets stored in the reproduction buffer increases;
the voice reproduction control part may repeat reproduction of the no-voice packet or insert the no-voice packet when the decrease notification is received from the packet state notifying part, while deleting the voice packet determined from the voice existence/absence determination result as having no voice from the reproduction buffer when the increase notification is received from the packet state notifying part.

The packet state notifying part may notify no-change in the number of packets when the number of voice packets stored in the reproduction buffer does not change during a predetermined period, and the voice reproduction control part may delete a voice packet determined as not having voice when no-change in the number of packets is notified of.

According to the present invention, a voice degradation due to an unnatural interpolation may not occur, a voice interruption may not occur even when a sudden delay occurs, and a delay fluctuation may be well absorbed.

BRIEF DESCRIPTION OF THE DRAWINGS

Other objects and further features of the present invention will become more apparent from the following detailed description when read in conjunction with the accompanying drawings:

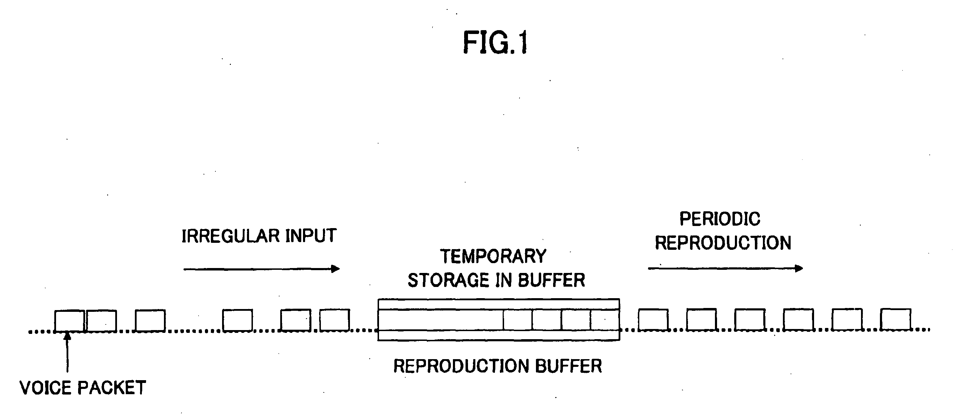

FIG. 1 illustrates a reproduction buffer;
FIG. 2 shows a waveform diagram for illustrating a voice interpolation in the prior art;
FIG. 3 illustrates occurrence of a voice interruption due to a depletion from the reproduction buffer;
FIG. 4 shows a configuration diagram of a first embodiment of a fluctuation absorbing buffer apparatus according to the present invention;
FIG. 5 shows a state of a control in the first embodiment;
FIG. 6 shows a configuration diagram of a second embodiment of a fluctuation absorbing buffer apparatus according to the present invention;
FIG. 7 shows a configuration diagram of a third embodiment of a fluctuation absorbing buffer apparatus according to the present invention;
FIG. 8 shows a configuration diagram of a fourth embodiment of a fluctuation absorbing buffer apparatus according to the present invention;
FIG. 9 shows a configuration diagram of a fifth embodiment of a fluctuation absorbing buffer apparatus according to the present invention; and
FIG. 10 shows a configuration diagram of one embodiment of a receiving part of a packet voice communication apparatus employing the fluctuation absorbing buffer apparatus according to the present invention.

DETAILED DESCRIPTION OF THE PREFERRED EMBODIMENTS

Based on figures, embodiments of the present invention are described next.

<First Embodiment>

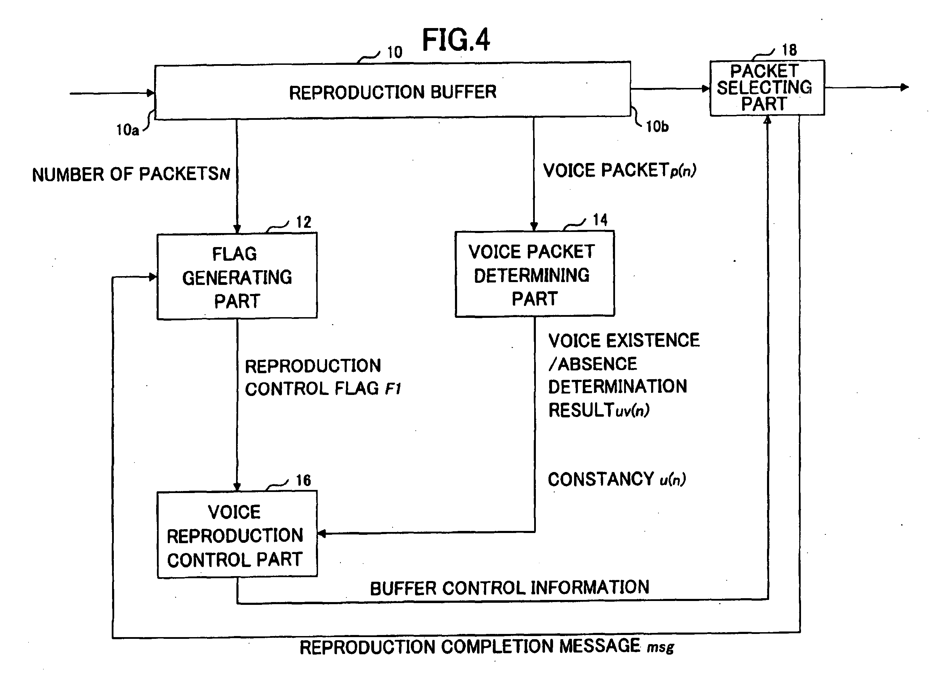

FIG. 4 shows a configuration diagram of a first embodiment of a fluctuation absorbing buffer apparatus according to the present invention. In the figure, a reproduction buffer 10 is a memory in a FIFO configuration and stores a voice packet provided at one end 10a, and outputs the voice packet from the other end 10b.

When receiving a reproduction completion notification message msg indicating that one packet reproduction has been completed from a packet selecting part 18, a flag generating part 12 determines the number N of packets in the reproduction buffer 10. The flag generating part 12 holds the preceding-time voice packet number N (-), and determines whether or not the number of voice packets stored in the reproduction buffer 10 tends to decrease, from a different between the current-time voice packet number N and the preceding-time voice packet number N (-). When determining that a decrease tendency appears, from this determination result, the flag generating part 12 turns on a reproduction control flag F1, and notifies it to a voice reproduction control part 16. Further, when determining that the above-mentioned voice packet number increases or does not change, the flag generating part 12 turns off the reproduction control flag F1.

A voice packet determining part 14 determines, for all the voice packets p(n) stored in the reproduction buffer 10, as to whether it has voice or not, and notifies the voice reproduction control part 16 of the thus-obtained voice existence/absence determination result uv(n). A specific method for the determination is such that, for example, when power of the voice packet is not more than a reference value, a determination that the voice packet has no voice is made.

The voice reproduction control part 16 controls reproduction in such a manner that, voice packets in the reproduction buffer 10 may not be depleted, based on the voice existence/absence determination result uv(n), when the reproduction control flag F1 is turned on. That is, when the determination of no voice has been made, after the voice packet m determined to have no voice is output from the reproduction buffer 10, buffer control information for inserting a no-voice packet, generated as mentioned later, is transmitted to the packet selecting part 18. Thus, reproduction is controlled in such a manner that voice packets in the reproduction buffer 10 may not be depleted.

When the reproduction control flag is turned off, buffer control information is transmitted to the packet selecting part 18 such that normal reproduction should be carried out.

The above-mentioned insertion of no-voice packet is repeated during a period in which the turned on state of the reproduction control flag F1 is kept.

Based on the buffer control information from the voice reproduction control part 16, the packet selecting part 18 takes a voice packet from the reproduction buffer 10 and outputs the same when carrying out the normal reproduction. When inserting a no-voice packet as mentioned above, the packet selecting part 18 generates the no-voice packet and outputs the same as mentioned above. After the completion of outputting of the voice packets, the packet selecting part 18 notifies the flag generating part 12 of the reproduction completion notification message msg.

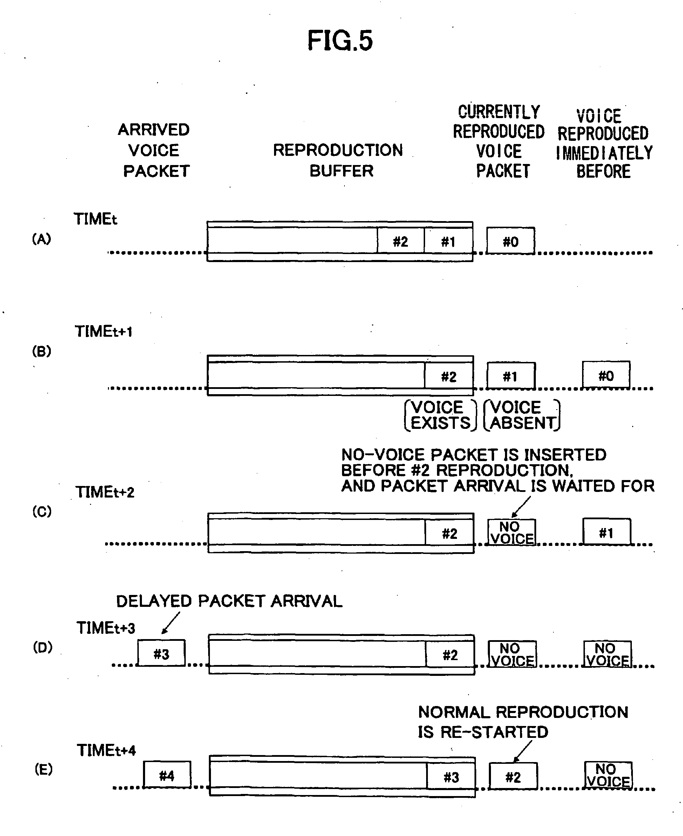

FIG. 5 shows a manner of control in the above-described first embodiment. As shown in FIG. 5, (A), when, at a time t, voice packets #1 and #2 are stored in the reproduction buffer 10, and the number of voice packets in the reproduction buffer 10 tends to decrease, a determination is made as to whether or not the voice packets #1 and #2 correspond to no-voice packets.

Then, as shown in FIG. 5, (B), after the no-voice packet #1 is output at a time t+1; as shown in FIG. 5, (C), an extra no-voice packet, generated, is output at a time t+2; and as shown in FIG. 5, (D), another extra no-voice packet is output at a time t+3 at which a delayed voice packet #3 has arrived.

At a next time t+4, the reproduction control flag is turned off when the delayed voice packet #3 has arrived, and thus, as shown in FIG. 5, (E), the voice packet #2 having voice is then output.

Thus, when the voice packet arrival is thus delayed and voice packets in the reproduction buffer 10 tend to decrease, reproduction control is made such that extra no-voice packets are output and reproduction of the voice including packet #2 is waited for until the delayed voice packet #3 has arrived and the decrease tendency in the voice packets in the reproduction buffer 10 is solved accordingly.

As a result, even when a large delay occurs and a voice packet does not arrive for a period, a control is made before the depletion of voice packets from the reproduction buffer 10, and thus, a voice interruption due to the depletion from the buffer can be avoided.

<Second Embodiment>

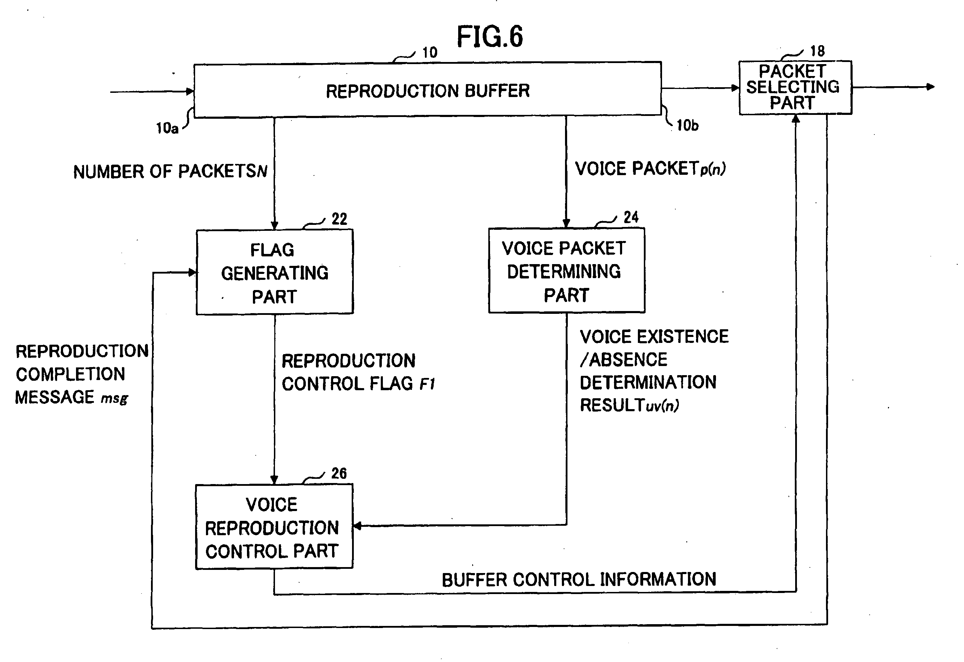

FIG. 6 shows a configuration diagram of a second embodiment of a fluctuation absorbing buffer apparatus according to the present invention. In the figure, a reproduction buffer 10 is a memory in a FIFO configuration and stores a voice packet provided at one end 10a, and outputs the voice packet from the other end 10b.

When receiving a reproduction completion notification message msg indicating that one packet reproduction has been completed from a packet selecting part 18, a flag generating part 22 determines the number N of voice packets in the reproduction buffer 10. The flag generating part 22 determines whether the number N of voice packets stored in the reproduction buffer 10 is not more than or exceeds a threshold. When determining that this packet number N is not more than the threshold, the flag generating part 22 turns on a reproduction control flag F1, and notifies a voice reproduction control part 26 thereof. Further, when determining that this packet number N exceeds the threshold, the flag generating part 22 turns off the reproduction control flag F1, and notifies the voice reproduction control part 36 thereof. The above-mentioned threshold is determined, for example, as a value smaller, than the above-mentioned reproduction reference value, by two.

A voice packet determining part 24 determines, for all the voice packets p(n) stored in the reproduction buffer 10, as to whether it has voice or not, and notifies the voice reproduction control part 26 of the thus-obtained voice existence/absence determination result uv(n). A specific method for the determination is such that, for example, when power of the voice packet is not more than a reference value, a determination that the voice packet has no voice is made.

When the reproduction control flag F1 is turned on, a voice reproduction control part 26 transmits buffer control information to the packet selecting part 18 such that an extra no-voice packet should be inserted after the voice packet m determined, based on the voice existence/absence determination result uv(n), as having no voice, and reproduction is made.

When the reproduction control flag is turned off, buffer control information is transmitted to the packet selecting part 18 such that normal reproduction should be carried out. The above-mentioned insertion of extra no-voice packet is repeated during a period in which the turned on state of the reproduction control flag F1 is kept.

Based on the buffer control information from the voice reproduction control part 26, the packet selecting part 18 takes the voice packet from the reproduction buffer 10 and outputs the same when carrying out the normal reproduction. When inserting an extra no-voice packet as mentioned above, the packet selecting part 18 generates the extra no-voice packet and outputs the same. After the completion of outputting of the packets, the packet selecting part 18 notifies the flag generating part 22 of the reproduction completion notification message msg.

It is noted that, instead of inserting the extra no-voice packet after the voice packet m determined as having no voice, the voice reproduction control part 26 may insert the same before the voice packet m. Further, instead of newly generating the extra no-voice packet, the voice reproduction control part 26 may repeatedly reproduce the voice packet m determined as having no voice.

Thus, according to the second embodiment of the present invention, a control is made before the depletion of voice packets from the reproduction buffer 10, and thus, a voice interruption due to the depletion from the buffer can be avoided. Also, since voice is interpolated by such a no-voice packet part, the voice quality is prevented from degrading.

<Third Embodiment>

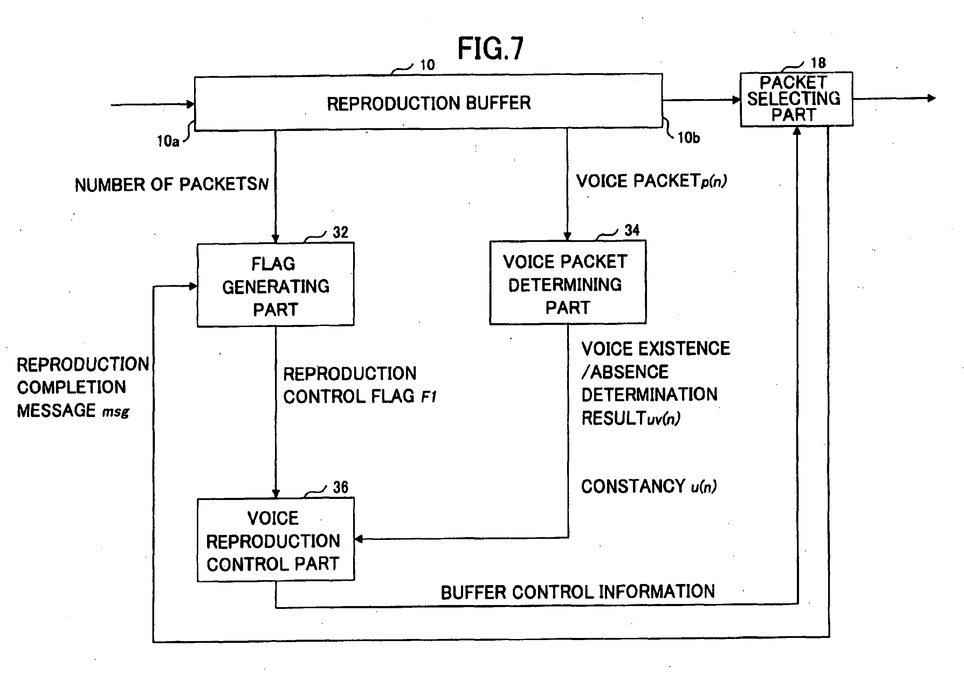

FIG. 7 shows a configuration diagram of a third embodiment of a fluctuation absorbing buffer apparatus according to the present invention. In the figure, a reproduction buffer 10 is a memory in a FIFO configuration and stores a voice packet provided at one end 10a, and outputs the voice packet from the other end 10b.

When receiving a reproduction completion notification message msg indicating that one packet reproduction has been completed from a packet selecting part 18, a flag generating part 32 determines the number N of voice packets in the reproduction buffer 10. The flag generating part 32 determines whether the number N of voice packets stored in the reproduction buffer 10 is not more than or exceeds a threshold. When determining that the packet number N is not more than the threshold, the flag generating part 32 turns on a reproduction control flag F1, and notifies a voice reproduction control part 36 thereof. Further, when determining that the packet number N exceeds the threshold, the flag generating part 32 turns off the reproduction control flag F1, and notifies the voice reproduction control part 36 thereof. The above-mentioned threshold is determined, for example, as a value smaller than the reproduction reference value by two.

A voice packet determining part 34 determines, for all the voice packets p(n) stored in the reproduction buffer 10, as to whether it has voice or not, and notifies the voice reproduction control part 36 of the thus-obtained voice existence/absence determination result uv(n). A specific method for the determination is such that, for example, when power of the voice packet is not more than a reference value, a determination that the voice packet has no voice is made. Further, the voice packet determining part 34 calculates, for each voice packet, a constancy u(n), and notifies the voice reproduction control part 36 thereof. The constancy u(n) is calculated as follows:

That is, for example, the maximum value of an autocorrelation function of the voice packet is regarded as the constancy u(n). For example, when the maximum value of the autocorrelation function is regarded as the constancy as mentioned above, the maximum value of the autocorrelation function $\phi_n(l)$ in a frame n given in the following formula (1) is regarded as the constancy u(n).

$$\phi_n(l) = \frac{1}{K} \sum_{k=0}^{K-1} x(k)x(k+1) \qquad (l = 1,2...L) \qquad \cdots(1)$$

In the formula (1), x(k) denotes a voice signal, K denotes a calculation range of the autocorrelation function, and L denotes a search range for the maximum value of the autocorrelation function.

Further, depending on a voice Codec used in the voice communication, when a parameter indicating the constancy is included in a voice packet (i.e., a coded stream), a required arithmetic operation for actually obtaining the constancy can be reduced by using the parameter indicating the constancy. For example, when a CELP Codec such as ITU-T G.729 is applied, a pitch gain (degree of a periodicity of voice) in the coded stream may be regarded as the constancy u(n).

When the reproduction control flag F1 is turned on, the voice reproduction control part 26 transmits buffer control information to the packet selecting part 18 such that an extra no-voice packet should be inserted after a voice packet m determined as having no voice, and reproduction should be made, when the voice packet m determined as having no voice exists, based on the voice existence/absence determination result uv(n). When no voice packet determined as having no voice exists, the voice reproduction control part 26 transmits buffer control information to the packet selecting part 18 such that a voice packet having the constancy u(n) not less than a predetermined threshold should be repeatedly reproduced. Alternatively, control is made such that, after the voice packet having the constancy u(n) more than the predetermined threshold, an interpolation voice packet, generated with the use of a PLC algorithm, should be inserted, and reproduction should be made.

When the reproduction control flag is turned off, buffer control information is transmitted to the packet selecting part 18 such that normal reproduction should be carried out.

The above-mentioned insertion of the extra no-voice packet, repetitive reproduction of the voice packet having the constancy u(n) not less than the predetermined threshold, or insertion of the interpolation voice packet, is repeated during a period in which the turned on state of the reproduction control flag F1 is kept.

Based on the buffer control information from the voice reproduction control part 36, the packet selecting part 18 takes the voice packet from the reproduction buffer 10 and outputs the same when carrying out the normal reproduction. When inserting the extra no-voice packet, the packet selecting part 18 generates the extra no-voice packet and outputs the same. After the completion of outputting of the packets, the packet selecting part 18 notifies the flag generating part 32 of the reproduction completion notification message msg.

It is noted that although interpolation with the use of the extra non-voice packet is given priority in this embodiment, the priority order of the interpolation may be determined in any manner. For example, the priority order may be reversed. Further, interpolation may be made with the use of a packet, from among the candidates for the interpolation, which has arrived earliest. Further, the threshold for the constancy u(n) may not be provided, and a voice packet having the maximum constancy may be repeated, or, the interpolation by means of the PLC may be carried out after the voice packet having the maximum constancy u(n).

Thus, according to the third embodiment of the present invention, even when no no-voice packet exists in the reproduction buffer 10, voice can be interpolated. Further, with the use of a voice packet having the high constancy when interpolation is made with the use of such a voice including part, and thus, voice quality degradation can be minimized.

<Fourth Embodiment>

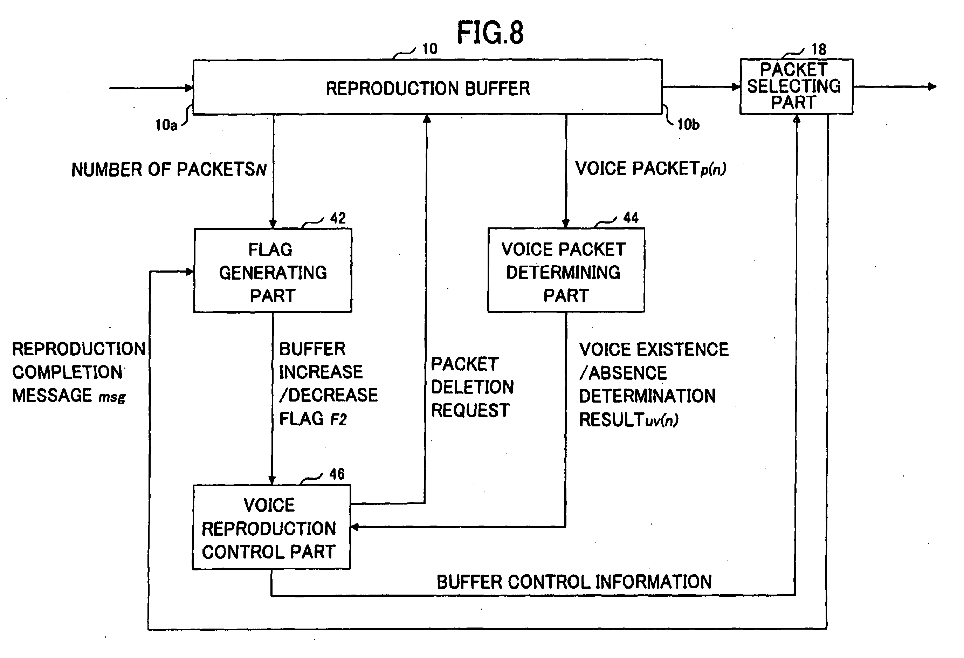

FIG. 8 shows a configuration diagram of a fourth embodiment of a fluctuation absorbing buffer apparatus according to the present invention. In the figure, a reproduction buffer 10 is a memory in a FIFO configuration, stores a voice packet provided to one end 10a and outputs the voice packet from the other end 10b.

A flag generating part 42 receives a reproduction completion notification message msg indicating a completion of one packet reproduction from a packet selecting part 18, and, in response thereto, determines the number N of voice packets in the reproduction buffer 10. Then, when the number N of voice packets is not more than a threshold TH1, the flag generating part 42 makes a buffer increase/decrease flag F2 have a value 11 (increase instruction), while, when the number N of voice packets is not less than a threshold TH2 (TH1 ≤ TH2), the flag generating part 42 makes the buffer increase/decrease flag F2 have a value 00 (decrease instruction). Then the flag generating part 42 sends the buffer increase/decrease flag F2 to a voice reproduction control part 46.

A method of setting the thresholds TH1 and TH2 is, for example, such that a number smaller than the reproduction reference value by 2 is set as the threshold TH1, while a number larger than the reproduction reference value by 2 is set as the threshold TH2. Further, increasing/decreasing of the above-mentioned voice packet number N may be monitored, and, when the voice packet number N increases (or decreases) more than a predetermined value, the buffer increase/decrease flag F2 may be made to have the value 00 (or the value 11). When the value of the voice packet number N does not change for a predetermined period, the buffer increase/decrease flag F2 may be made to have the value 00 (decrease instruction).

A voice packet determining part 44 determines whether or not the voice packet p(n) in the reproduction buffer 10 has voice, and notifies the voice reproduction control part 46 of the thus-obtained voice existence/absence determination result uv(n). A method for the determination is such that, for example, a determination is made that the voice packet has no voice (voice absence) when power of the voice packet is not more than a reference value.

When the buffer increase/decrease flag F2 has the value 11 (increase instruction), the voice reproduction control part 46 determines that a reproduction control flag is turned on, and, based on the voice existence/absence determination result uv(n), the voice reproduction control part 46 transmits buffer control information to the packet selecting part 18 for inserting an extra no-voice packet after a voice packet m determined as having no voice and reproducing them. It is noted that, instead of inserting after the no-voice packet m, the insertion may be made before the no-voice packet m. Further, instead of newly generating an extra no-voice packet to insert, the voice packet determined as having no voice may be reproduced repeatedly.

On the other hand, when the buffer increase/decrease flag F2 has the value 00 (decrease instruction), the voice reproduction control part 46 transmits buffer control information to the packet selecting part 18 such as to carry out normal reproduction, after requesting a deletion of the voice packet determined as having no voice from the reproduction buffer, based on the voice existence/absence determination result uv(n).

When the buffer increase/decrease flag F2 has a value other than any one of the values 00 and 11, the voice reproduction control part 46 transmits buffer control information to the packet selecting part 18 such as to carry out the normal reproduction.

The above-mentioned insertion of extra no-voice packet is repeated during a period in which the buffer increase/decrease flag F2 has the value 11 (increase instruction).

Based on the buffer control information from the voice reproduction control part 46, the packet selecting part 18 takes the voice packet from the reproducing buffer, outputs the same, and, when inserting an extra no-voice packet, the packet selecting part 18 generates the extra no-voice packet and outputs the same. After the completion of the packet output, the reproduction completion notification message msg is notified of to the flag generating part 42.

According to the fourth embodiment, by reducing the no-voice packet in response to the decrease instruction, it is possible to reduce a delay when the reproduction buffer is stabilized, and thus, to improve speech real-time performance.

<Fifth Embodiment>

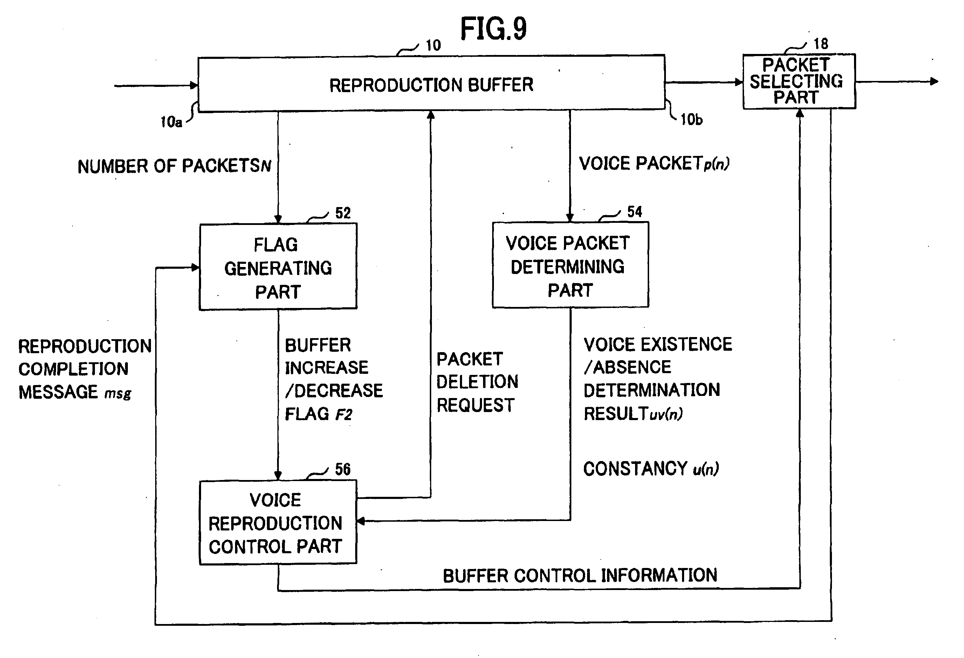

FIG. 9 shows a configuration diagram of a fifth embodiment of a fluctuation absorbing buffer apparatus according to the present invention. In the figure, a reproduction buffer 10 is a memory in a FIFO configuration, stores a voice packet provided to one end 10a and outputs the voice packet from the other end 10b.

When receiving a reproduction completion notification message msg indicating a completion of one packet reproduction from a packet selecting part 18, a flag generating part 52 determines the number N of voice packets in the reproduction buffer 10. Then, when this number N of voice packets is not more than a threshold TH1, the flag generating part 42 makes a buffer increase/decrease flag F2 have a value 11 (increase instruction), while, when the number N of voice packets is not less than a threshold TH2 (TH1 ≤ TH2), the flag generating part 42 makes the buffer increase/decrease flag F2 have a value 00 (decrease instruction). Then the flag generating part 42 sends the buffer increase/decrease flag F2 to a voice reproduction control part 56.

A method of setting the thresholds TH1 and TH2 is, for example, such that a number smaller than the reproduction reference value by 2 is set as the threshold TH1, while a number larger than the reproduction reference value by 2 is set as the threshold TH2. Further, increase/decrease in the voice packet number N may be monitored, and, when the voice packet number N increases (or decreases) more than a predetermined value, the buffer increase/decrease flag F2 may be made to have the value 00 (or the value 11). When the value of the voice packet number N does not change for a predetermined period, the buffer increase/decrease flag F2 may be made to have the value 00 (decrease instruction).

A voice packet determining part 54 determines whether or not the voice packet p(n) in the reproduction buffer 10 has voice, and notifies the voice reproduction control part 56 of the thus-obtained voice existence/absence determination result uv(n). A method for the determination is such that, for example, a determination is made that the voice packet has no voice (voice absence) when power of the voice packet is not more than a reference value. Further, the voice packet determining part 54 calculates a constancy u(n) for each voice packet and notifies the voice reproduction control part 56 thereof. A method of calculating the constancy u(n) is such that, for example, the maximum value or a magnitude of a pitch gain of an autocorrelation function of the voice packet is regarded as the constancy.

When the buffer increase/decrease flag F2 has the value 11 (increase instruction), the voice reproduction control part 56 determines that a reproduction control flag is turned on, and based on the voice existence/absence determination result uv(n) and the constancy u(n), the voice reproduction control part 56 transmits buffer control information to the packet selecting part 18 for inserting an extra no-voice packet after a voice packet m determined as having no voice, when the voice packet m determined as having no voice exists, and reproducing them. When there is no voice packet determined as having no voice, the voice reproduction control part 56 transmits buffer control information to the packet selecting part 18 such as to reproduce a voice packet having the constancy u(n) not less than a predetermined threshold repeatedly. Alternatively, control is made such that, after the voice packet having the constancy u(n) not less than the predetermined threshold, an interpolation voice packet may be reproduced with the use of the PLC algorithm, be inserted, and be reproduced.

On the other hand, when the buffer increase/decrease flag F2 has the value 00 (decrease instruction), the voice reproduction control part 56 transmits buffer control information to the packet selecting part 18 such as to carry out normal reproduction, after requesting a deletion of the voice packet determined as having no voice from the reproduction buffer, based on the voice existence/absence determination result uv(n). When there is no voice packet determined as having no voice, the voice reproduction control part 56 requests a deletion of a voice packet having the constancy u(n) not less than the predetermined threshold from the reproduction buffer, and then, transmits buffer control information to the packet selecting part 18 such as to carry out the normal reproduction.

When the buffer increase/decrease flag F2 has a value other than any one of the value 00 or 11, the voice reproduction control part 46 transmits buffer control information to the packet selecting part 18 such as to carry out the normal reproduction. The above-mentioned insertion of extra no-voice packet or repeated reproduction of the voice packet having the constancy not less than the predetermined value or reproduction of the interpolation voice packet is repeated during a period in which the buffer increase/decrease flag F2 has the value 11 (increase instruction).

Based on the buffer control information from the voice reproduction control part 56, the packet selecting part 18 takes the voice packet from the reproducing buffer, outputs the same, and, when inserting an extra no-voice packet, the packet selecting part 18 generates the extra no-voice packet and outputs the same. After the completion of the packet output, the reproduction completion notification message msg is notified of to the flag generating part 52.

In this embodiment, as described above, interpolation with the use of the extra no-voice packet is given priority. However, the priority of the interpolation may be determined in any manner, and, the priority order may be reversed, for example. Further, interpolation may be made with the use of a voice packet, from among candidates for the interpolation, which has arrived earliest. Further, the above-mentioned predetermined threshold for the constancy u(n) may not be provided, and a voice packet having the maximum constancy may be repeated, or, the interpolation by means of PLC may be carried out after the voice packet having the maximum constancy u(n) occurs.

<Packet Voice Communication Apparatus>

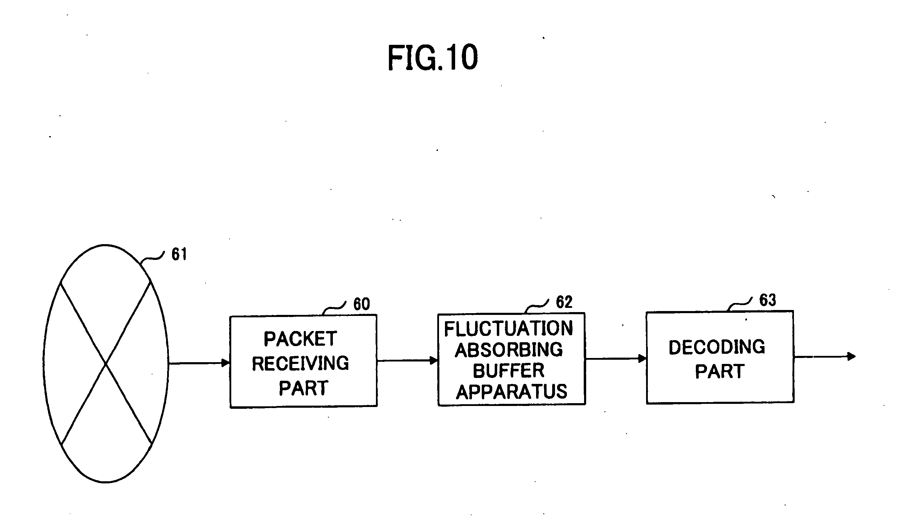

FIG. 10 shows a configuration diagram of a receiving part of a packet voice communication apparatus employing the fluctuation absorbing buffer apparatus according to the present invention. In the figure, a packet receiving part 60 is connected to a communication network 61, receives a voice packet directed thereto and transmitted from the network 61, and provides the same to the fluctuation absorbing buffer apparatus 62.

The fluctuation absorbing buffer apparatus 62 is any one of those shown in FIGS. 4, 6 through 9, and absorbs a fluctuation in the voice packet provided from the packet receiving part 60. The voice packet output by the fluctuation absorbing buffer 62 is decoded by a decoding part 63, and is output as a corresponding voice signal.

It is noted that, any one of the flag generating parts 12, 22, 32, 42 and 52 corresponds to a packet state notifying part; any one of the voice packet determining parts 14, 24, 34, 44 and 54 corresponds to a voice packet determining part; and any one of the voice reproduction control parts 16, 26, 36, 46 and 56, together with the packet selecting part 18, correspond to a voice reproduction control part.

Further, the present invention is not limited to the above-described embodiments, and variations and modifications may be made without departing from the basic concept of the present invention claimed below.

The present application is based on Japanese Priority Application No. JP20060050789, filed on February 27, 2006.

**Claims**

1. A fluctuation absorbing buffer apparatus configured to absorb, by means of a reproduction buffer (10), a transmission delay time fluctuation occurring in a voice packet communication system, comprising:

    a packet state notifying part adapted to make a decrease notification when the number of voice packets stored in the reproduction buffer decreases;
    a voice determining part (24) adapted to make a determination as to whether or not voice exists in all the voice packets stored in the reproduction buffer by determining the power of the voice packets, such that when the power of the voice packets is smaller than a reference value, a determination that the voice packet has no voice is made; and
    a voice reproduction control part (26) adapted to repeatedly reproduce, from the reproduction buffer, one determined voice packet determined as not having voice when the decrease is notified of by said packet state notifying part.

2. The fluctuation absorbing buffer apparatus as claimed in claim 1, wherein:

    said voice reproduction control part (26) is adapted to repeat reproduction of the no-voice packet during a period in which said packet state notifying part notifies of the decrease.

3. The fluctuation absorbing buffer apparatus as claimed in claim 1, wherein:

    said voice reproduction control part (26) is adapted to insert the no-voice packet after a voice packet determined as having no voice.

4. The fluctuation absorbing buffer apparatus as claimed in any one of claims 1-3, wherein:

    said packet state notifying part is adapted to make the decrease notification when the number of voice packets stored in said reproduction buffer decreases to be not more than a threshold.

5. The fluctuation absorbing buffer apparatus as claimed in any one of claims 1-4, wherein:

    said voice packet determining part (24) is adapted to determine whether or not the voice packet has a constancy not less than a predetermined threshold, as well as determining as to whether or not the packet has voice; and
    said voice reproduction control part (26) is adapted to repeat reproduction of the packet determined as having no voice or the packet having the constancy more than the predetermined threshold.

6. The fluctuation absorbing buffer apparatus as claimed in any one of claims 1-5, wherein:

said voice packet determining part (24) is adapted to determine whether or not the voice packet has a maximum constancy, as well as determining as to whether or not the packet has voice; and
said voice reproduction control part (26) is adapted to repeat reproduction of the packet determined as having no voice or the packet having the maximum constancy.

7. The fluctuation absorbing buffer apparatus as claimed in claim 5, wherein:

    when there are no packets determined as having no voice, said voice reproduction control part (26) is adapted to repeat reproduction of the voice packet having the constancy more than the predetermined threshold.

8. The fluctuation absorbing buffer apparatus as claimed in claim 6, wherein:

    when there are no packets determined as having no voice, said voice reproduction control part (26) is adapted to repeat reproduction of the voice packet having the maximum constancy.

9. The fluctuation absorbing buffer apparatus as claimed in claim 5 or 7, wherein:

    said voice reproduction control part (26) is adapted to insert interpolation voice generated according to a Packet Loss Concealment algorithm after the packet having the constancy more than the predetermined threshold.

10. The fluctuation absorbing buffer apparatus as claimed in claim 6 or 8, wherein:

    said voice reproduction control part (26) is adapted to insert interpolation voice generated according to a Packet Loss Concealment algorithm after the packet having the maximum constancy.

11. The fluctuation absorbing buffer apparatus as claimed in any one of claims 5, 7 and 9, wherein:

    said voice packet determining part (24) is adapted to regard a maximum value of an autocorrelation function as the constancy of the voice packet.

12. The fluctuation absorbing buffer apparatus as claimed in any one of claims 6, 8 and 10, wherein:

    said voice packet determining part (24) is adapted to regard a maximum value of an autocorrelation function as the constancy of the voice packet.

13. The fluctuation absorbing buffer apparatus as claimed in any one of claims 5, 7, 9 and 11, wherein:

    said voice packet determining part (24) is adapted to regard a magnitude of a pitch gain of the voice packet as the constancy of said voice packet.

14. The fluctuation absorbing buffer apparatus as claimed in any one of claims 6, 8, 10 and 12, wherein:

    said voice packet determining part (24) is adapted to regard a magnitude of a pitch gain of the voice packet as the constancy of said voice packet.

15. The fluctuation absorbing buffer apparatus as claimed in any one of claims 1-14, wherein:

    said packet state notifying part is adapted to make the decrease notification when the number of the voice packets stored in said reproduction buffer decreases, and to make the increase notification when said number of voice packets increases; and
    said voice reproduction control part (26) is adapted to repeat reproduction of the no-voice packet or to insert the no-voice packet when the decrease notification is received from said packet state notifying part, while deleting the voice packet determined from the voice existence/absence determination result as having no voice when the increase notification is received from said packet state notifying part.

16. The fluctuation absorbing buffer apparatus as claimed in claim 15, wherein:

    said voice reproduction control part (26) is adapted to delete a voice packet having a constancy not less than a predetermined threshold when there is no packet determined as having no voice when the increase is notified of by said packet state notifying part.

17. The fluctuation absorbing buffer apparatus as claimed in claim 15, wherein:

said packet state notifying part is adapted to make the decrease notification when the number of the voice packets stored in said reproduction buffer decreases to be not more than a first predetermined threshed, and to make the increase notification when said number of voice packets increases to be not less than a second predetermined threshold.

18. The fluctuation absorbing buffer apparatus as claimed in claim 15, wherein:

said packet state notifying part is adapted to notify of no change in the number of packets when the number of the voice packets stored in said reproduction buffer does not change during a predetermined period, and said voice reproduction control part (26) is adapted to delete a voice packet determined as having no voice when the no change in the number of packets is notified of.

19. A packet voice communication apparatus having the fluctuation absorbing buffer apparatus as claimed in any one of claims 1-18, wherein:

a voice packet received from a communication network is provided to said fluctuation absorbing buffer apparatus, and
the voice packet output from said fluctuation absorbing buffer apparatus is decoded.

**Patentansprüche**

1. Eine Fluktuationsabsorptionspuffervorrichtung, die konfiguriert ist zum Absorbieren, durch einen Reproduktionspuffer (10), einer Übertragungsverzögerungszeitfluktuation, die in einem Sprachpaketkommunikationssystem auftritt, umfassend:

ein Paketzustand-Mitteilungsteil, das angepasst ist, eine Verminderungsmitteilung durchzuführen, wenn sich die Anzahl von in dem Reproduktionspuffer gespeicherten Sprachpaketen vermindert;
ein Sprachbestimmungsteil (24), das angepasst ist eine Bestimmung durchzuführen, ob Sprache in allen Sprachpaketen existiert, die in dem Reproduktionspuffer gespeichert sind, durch Bestimmen der Leistung der Sprachpakete, so dass wenn die Leistung der Sprachpakete kleiner als ein Referenzwert ist, eine Bestimmung durchgeführt wird, dass das Sprachpaket keine Sprache aufweist; und
ein Sprachreproduktionssteuerungsteil (26), das angepasst ist, aus dem Reproduktionspuffer wiederholend ein bestimmtes Sprachpaket zu reproduzieren, bei dem bestimmt ist keine Sprache aufzuweisen, wenn die Verminderung durch das Paketzustand-Mitteilungsteil mitgeteilt wird.

2. Die Fluktuationsabsorptionspuffervorrichtung nach Anspruch 1, wobei:

das Sprachreproduktionssteuerungsteil (26) angepasst ist zum Wiederholen der Reproduktion des keine-Sprache-Pakets während einer Periode, in der das Paketzustandsmitteilungsteil die Verminderung mitteilt.

3. Die Fluktuationsabsorptionspuffervorrichtung nach Anspruch 1, wobei:

das Sprachreproduktionssteuerungsteil (26) angepasst ist zum Einfügen des keine-Sprache-Pakets nach einem Sprachpaket, bei dem bestimmt wurde, dass dieses keine Sprache aufweist.

4. Die Fluktuationsabsorptionspuffervorrichtung nach einem der Ansprüche 1 - 3, wobei:

das Paketzustandsmitteilungsteil angepasst ist, die Verminderungsmitteilung durchzuführen, wenn sich die Anzahl von in dem Reproduktionspuffer gespeicherten Sprachpaketen auf nicht mehr als einen Grenzwert vermindert.

5. Die Fluktuationsabsorptionspuffervorrichtung nach einem der Ansprüche 1 - 4, wobei:

das Sprachpaketbestimmungsteil (24) angepasst ist zum Bestimmen, ob das Sprachpaket eine Konstanz aufweist, die nicht weniger als ein vorbestimmter Grenzwert ist, als auch zu Bestimmen, ob das Paket Sprache aufweist; und

das Sprachreproduktionssteuerungsteil (26) angepasst ist zum Wiederholen der Reproduktion des Pakets, bei dem bestimmt wurde, dass dieses keine Sprache aufweist, oder des Pakets, das die Konstanz aufweist, die größer ist als der vorbestimmte Grenzwert.

6. Die Fluktuationsabsorptionspuffervorrichtung nach einem der Ansprüche 1 - 5, wobei:

das Sprachpaketbestimmungsteil (24) angepasst ist zum Bestimmen, ob das Sprachpaket eine maximale Konstanz aufweist, als auch zum Bestimmen, ob das Paket Sprache aufweist; und

das Sprachreproduktionssteuerungsteil (26) angepasst ist zum Wiederholen der Reproduktion des Pakets, bei dem bestimmt wurde, dass dieses keine Sprache aufweist, oder des Pakets, das die maximale Konstanz aufweist.

7. Die Fluktuationsabsorptionspuffervorrichtung nach Anspruch 5, wobei:

wenn bei keinen Paketen bestimmt wird, dass diese keine Sprache aufweisen, das Sprachreproduktionssteuerungsteil (26) angepasst ist zum Wiederholen des Sprachpakets, das die Konstanz aufweist, die größer als der vorbestimmte Grenzwert ist.

8. Die Fluktuationsabsorptionspuffervorrichtung nach Anspruch 6, wobei:

wenn bei keinen Paketen bestimmt wird, dass diese keine Sprache aufweisen, das Sprachreproduktionssteuerungsteil (26) angepasst ist zum Wiederholen des Sprachpakets, das die maximale Konstanz aufweist.

9. Die Fluktuationsabsorptionspuffervorrichtung nach Anspruch 5 oder 7, wobei:

das Sprachreproduktionssteuerungsteil (26) angepasst ist zum Einfügen von Interpolationssprache, die gemäß einem Paketverlustverheimlichungsalgorithmus erzeugt wird, nachdem das Paket die Konstanz aufweist, die größer als der vorbestimmte Grenzwert ist.

10. Die Fluktuationsabsorptionspuffervorrichtung nach Anspruch 6 oder 8, wobei:

das Sprachreproduktionssteuerungsteil (26) angepasst ist zum Einfügen von Interpolationssprache, die gemäß einem Paketverlustverheimlichungsalgorithmus erzeugt wird, nachdem das Paket die maximale Konstanz aufweist.

11. Die Fluktuationsabsorptionspuffervorrichtung nach einem der Ansprüche 5, 7 und 9 wobei:

das Sprachpaketbestimmungsteil (24) angepasst ist zum Betrachten eines maximalen Werts einer Autokorrelationsfunktion als die Konstanz des Sprachpakets.

12. Die Fluktuationsabsorptionspuffervorrichtung nach einem der Ansprüche 6, 8 und 10 wobei:

das Sprachpaketbestimmungsteil (24) angepasst ist zum Betrachten eines maximalen Werts einer Autokorrelationsfunktion als die Konstanz des Sprachpakets.

13. Die Fluktuationsabsorptionspuffervorrichtung nach einem der Ansprüche 5, 7, 9 und 11 wobei:

das Sprachpaketbestimmungsteil (24) angepasst ist zum Betrachten einer Abstandssteigerung des Sprachpakets als die Konstanz des Sprachpakets.

14. Die Fluktuationsabsorptionspuffervorrichtung nach einem der Ansprüche 6, 8, 10 und 12 wobei:

das Sprachpaketbestimmungsteil (24) angepasst ist zum Betrachten einer Abstandssteigerung des Sprachpakets als die Konstanz des Sprachpakets.

**15.** Die Fluktuationsabsorptionspuffervorrichtung nach einem der Ansprüche 1 - 14 wobei:

das Paketzustandsmitteilungsteil angepasst ist, die Verminderungsmitteilung durchzuführen, wenn sich die Anzahl von in dem Reproduktionspuffer gespeicherten Sprachpaketen vermindert, und die Erhöhungsmitteilung durchzuführen, wenn sich die Anzahl von Sprachpaketen erhöht; und
das Sprachreproduktionssteuerungsteil (26) angepasst ist zum Wiederholen der Reproduktion der keine-Sprache-Pakete oder zum Einfügen der keine-Sprache-Pakete, wenn die Verminderungsmitteilung von dem Paketzustandsmitteilungsteil empfangen wird, während das Sprachpaket gelöscht wird, bei dem aus dem Bestimmungsergebnis des Vorhandenseins/Nichtvorhandenseins von Sprache bestimmt wird, dass dieses keine Sprache aufweist, wenn die Erhöhungsmitteilung von dem Paketzustandsmitteilungsteil empfangen wird.

**16.** Die Fluktuationsabsorptionspuffervorrichtung nach Anspruch 15, wobei:

das Sprachreproduktionssteuerungsteil (26) angepasst ist zum Löschen eines Sprachpakets, das eine Konstanz aufweist, die nicht weniger ist als ein vorbestimmter Grenzwert, wenn bei keinem Paket bestimmt wird, dass dieses keine Sprache aufweist, wenn die Erhöhung durch den Paketzustandsmitteilungsteil mitgeteilt wird.

**17.** Die Fluktuationsabsorptionspuffervorrichtung nach Anspruch 15, wobei:

das Paketzustandsmitteilungsteil angepasst ist, die Verminderungsmitteilung durchzuführen, wenn sich die Anzahl von in dem Reproduktionspuffer gespeicherten Sprachpaketen auf nicht mehr als einen ersten Grenzwert vermindert, und die Erhöhungsmitteilung durchzuführen, wenn sich die Anzahl von Sprachpaketen auf nicht weniger als einen zweiten vorbestimmten Grenzwert erhöht.

**18.** Die Fluktuationsabsorptionspuffervorrichtung nach Anspruch 15, wobei:

das Paketzustandsmitteilungsteil angepasst ist zum Mitteilen von keiner Änderung der Anzahl von Paketen, wenn sich die Anzahl der in dem Reproduktionspuffer gespeicherten Sprachpakete während einer vorbestimmten Periode nicht ändert, und das Sprachreproduktionssteuerungsteil (26) angepasst ist zum Löschen eines Sprachpakets, bei dem bestimmt wurde, dass diese keine Sprache aufweist, wenn keine Änderung der Anzahl von Paketen mitgeteilt wird.

**19.** Eine Paketsprachenkommunikationsvorrichtung, die eine Fluktuationsabsorptionspuffervorrichtung nach einem der Ansprüche 1 - 18 aufweist, wobei:

ein von einem Kommunikationsnetzwerk empfangenes Sprachpaket der Fluktuationsabsorptionspuffervorrichtung bereitgestellt wird, und
das aus der Fluktuationsabsorptionspuffervorrichtung ausgegebene Sprachpaket decodiert wird.

**Revendications**

**1.** Appareil tampon d'absorption de fluctuation configuré pour absorber, au moyen d'un tampon de reproduction (10), une fluctuation de temps de retard de transmission se produisant dans un système de communication de paquets vocaux, comprenant :

une partie de notification d'état de paquet adaptée pour effectuer une notification de diminution lorsque le nombre de paquets vocaux stockés dans le tampon de reproduction diminue ;
une partie de détermination de voix (24) adaptée pour effectuer une détermination quant à si la voix existe ou non dans tous les paquets vocaux stockés dans le tampon de reproduction en déterminant la puissance des paquets vocaux, de sorte que lorsque la puissance des paquets vocaux est inférieure à une valeur de référence, une détermination selon laquelle le paquet vocal n'a pas de voix est effectuée ; et
une partie de commande de reproduction vocale (26) adaptée pour reproduire de façon répétée, à partir du tampon de reproduction, un paquet vocal déterminé, déterminé comme n'ayant pas de voix lorsque la diminution est notifiée par ladite partie de notification d'état de paquet.

**2.** Appareil tampon d'absorption de fluctuation selon la revendication 1, dans lequel :

ladite partie de commande de reproduction vocale (26) est adaptée pour répéter la reproduction du paquet sans voix au cours d'une période pendant laquelle ladite partie de notification d'état de paquet notifie la diminution.

**3.** Appareil tampon d'absorption de fluctuation selon la revendication 1, dans lequel :

ladite partie de commande de reproduction vocale (26) est adaptée pour insérer le paquet sans voix après un paquet vocal déterminé comme n'ayant pas de voix.

**4.** Appareil tampon d'absorption de fluctuation selon l'une quelconque des revendications 1 à 3, dans lequel :

ladite partie de notification d'état de paquet est adaptée pour effectuer la notification de diminution lorsque le nombre de paquets vocaux stockés dans ledit tampon de reproduction diminue pour ne pas être supérieur à un seuil.

**5.** Appareil tampon d'absorption de fluctuation selon l'une quelconque des revendications 1 à 4, dans lequel :

ladite partie de détermination de paquet vocal (24) est adaptée pour déterminer si le paquet vocal a ou non une constance non inférieure à un seuil prédéterminé, ainsi que déterminer si le paquet a de la voix ou non ; et ladite partie de commande de reproduction vocale (26) est adaptée pour répéter la reproduction du paquet déterminé comme n'ayant pas de voix ou du paquet ayant la constance supérieure au seuil prédéterminé.

**6.** Appareil tampon d'absorption de fluctuation selon l'une quelconque des revendications 1 à 5, dans lequel :

ladite partie de détermination de paquet vocal (24) est adaptée pour déterminer si le paquet vocal a ou non une constance maximum, ainsi que déterminer si le paquet a de la voix ou non ; et ladite partie de commande de reproduction vocale (26) est adaptée pour répéter la reproduction du paquet déterminé comme n'ayant pas de voix ou du paquet ayant la constance maximum.

**7.** Appareil tampon d'absorption de fluctuation selon la revendication 5, dans lequel :

lorsqu'il n'y a pas de paquets déterminés comme n'ayant pas de voix, ladite partie de commande de reproduction vocale (26) est adaptée pour répéter la reproduction du paquet vocal ayant la constance supérieure au seuil prédéterminé.

**8.** Appareil tampon d'absorption de fluctuation selon la revendication 6, dans lequel :

lorsqu'il n'y a pas de paquets déterminés comme n'ayant pas de voix, ladite partie de commande de reproduction vocale (26) est adaptée pour répéter la reproduction du paquet vocal ayant la constance maximum.

**9.** Appareil tampon d'absorption de fluctuation selon la revendication 5 ou 7, dans lequel :

ladite partie de commande de reproduction vocale (26) est adaptée pour insérer une voix d'interpolation générée selon un algorithme de masquage de perte de paquet après le paquet ayant la constance supérieure au seuil prédéterminé.

**10.** Appareil tampon d'absorption de fluctuation selon la revendication 6 ou 8, dans lequel :

ladite partie de commande de reproduction vocale (26) est adaptée pour insérer une voix d'interpolation générée selon un algorithme de masquage de perte de paquet après le paquet ayant la constance maximum.

**11.** Appareil tampon d'absorption de fluctuation selon l'une quelconque des revendications 5, 7 et 9, dans lequel :

ladite partie de détermination de paquet vocal (24) est adaptée pour considérer une valeur maximum d'une fonction d'autocorrélation comme la constance du paquet vocal.

**12.** Appareil tampon d'absorption de fluctuation selon l'une quelconque des revendications 6, 8 et 10, dans lequel :

ladite partie de détermination de paquet vocal (24) est adaptée pour considérer une valeur maximum d'une fonction d'autocorrélation comme la constance du paquet vocal.

13. Appareil tampon d'absorption de fluctuation selon l'une quelconque des revendications 5, 7, 9 et 11, dans lequel :

ladite partie de détermination de paquet vocal (24) est adaptée pour considérer une grandeur d'un gain tonal du paquet vocal comme la constance dudit paquet vocal.

14. Appareil tampon d'absorption de fluctuation selon l'une quelconque des revendications 6, 8, 10 et 12, dans lequel :

ladite partie de détermination de paquet vocal (24) est adaptée pour considérer une grandeur d'un gain tonal du paquet vocal comme la constance dudit paquet vocal.

15. Appareil tampon d'absorption de fluctuation selon l'une quelconque des revendications 1 à 14, dans lequel :

ladite partie de notification d'état de paquet est adaptée pour effectuer la notification de diminution lorsque le nombre de paquets vocaux stockés dans ledit tampon de reproduction diminue, et pour effectuer la notification d'augmentation lorsque ledit nombre de paquets vocaux augmente ; et
ladite partie de commande de reproduction vocale (26) est adaptée pour répéter la reproduction du paquet sans voix ou pour insérer le paquet sans voix lorsque la notification de diminution est reçue en provenance de ladite partie de notification d'état de paquet, tout en supprimant le paquet vocal déterminé à partir du résultat de détermination d'existence/absence de voix comme n'ayant pas de voix lorsque la notification d'augmentation est reçue en provenance de ladite partie de notification d'état de paquet.

16. Appareil tampon d'absorption de fluctuation selon la revendication 15, dans lequel :

ladite partie de commande de reproduction vocale (26) est adaptée pour supprimer un paquet vocal ayant une constance non inférieure à un seuil prédéterminé lorsqu'il n'y a aucun paquet déterminé comme n'ayant pas de voix lorsque l'augmentation est notifiée par ladite partie de notification d'état de paquet.

17. Appareil tampon d'absorption de fluctuation selon la revendication 15, dans lequel :

ladite partie de notification d'état de paquet est adaptée pour effectuer la notification de diminution lorsque le nombre de paquets vocaux stockés dans ledit tampon de reproduction diminue pour ne pas être supérieur à un premier seuil prédéterminé, et pour effectuer la notification d'augmentation lorsque ledit nombre de paquets vocaux augmente pour ne pas être inférieur à un second seuil prédéterminé.

18. Appareil tampon d'absorption de fluctuation selon la revendication 15, dans lequel :

ladite partie de notification d'état de paquet est adaptée pour notifier aucun changement dans le nombre de paquets lorsque le nombre de paquets vocaux stockés dans ledit tampon de reproduction ne change pas pendant une période prédéterminée, et ladite partie de commande de reproduction vocale (26) est adaptée pour supprimer un paquet vocal déterminé comme n'ayant pas de voix lorsqu'aucun changement dans le nombre de paquets est notifié.

19. Appareil de communication de paquets vocaux ayant l'appareil tampon d'absorption de fluctuation selon l'une quelconque des revendications 1 à 18, dans lequel :

un paquet vocal reçu en provenance d'un réseau de communication est fourni audit appareil tampon d'absorption de fluctuation, et
le paquet vocal sorti dudit appareil tampon d'absorption de fluctuation est décodé.

FIG.1

IRREGULAR INPUT

TEMPORARY
STORAGE IN BUFFER

PERIODIC
REPRODUCTION

REPRODUCTION BUFFER

VOICE PACKET

# FIG.2

TRANSMITTED
VOICE

INTERPOLATED
VOICE

$\leftarrow$—T1—$\rightarrow$

EP 1 826 959 B1

# FIG.3

**TIME t**

ARRIVED VOICE PACKET

REPRODUCTION BUFFER

CURRENTLY REPRODUCED VOICE PACKET

#2 #1   #0

SINCE NO PACKET HAS ARRIVED,
DELAY CANNOT BE MEASURED ⇒ BUFFER CANNOT BE INCREASED.

**TIME (t+1)**

#2   #1

BUFFER DEPLETION

**TIME (t+2)**

#2

LACK OF REPRODUCED VOICE ⇒ VOICE INTERRUPTION

**TIME (t+3)**

EP 1 826 959 B1

# FIG.4

**REPRODUCTION BUFFER** — 10

10a — NUMBER OF PACKETS $N$

10b — VOICE PACKET $p(n)$

18 — **PACKET SELECTING PART**

12 — **FLAG GENERATING PART**

14 — **VOICE PACKET DETERMINING PART**

REPRODUCTION CONTROL FLAG $F1$

VOICE EXISTENCE /ABSENCE DETERMINATION RESULT $uv(n)$

CONSTANCY $u(n)$

16 — **VOICE REPRODUCTION CONTROL PART**

BUFFER CONTROL INFORMATION

REPRODUCTION COMPLETION MESSAGE $msg$

EP 1 826 959 B1

# FIG.5

**FIG.6**

PACKET SELECTING PART — 18

REPRODUCTION BUFFER — 10
10a
10b

VOICE PACKET $p(n)$

NUMBER OF PACKETS $N$

VOICE PACKET DETERMINING PART — 24

VOICE EXISTENCE /ABSENCE DETERMINATION RESULT $uv(n)$

FLAG GENERATING PART — 22

REPRODUCTION CONTROL FLAG $F1$

VOICE REPRODUCTION CONTROL PART — 26

BUFFER CONTROL INFORMATION

REPRODUCTION COMPLETION MESSAGE $msg$

21

# FIG.7

REPRODUCTION BUFFER ~10

10a — NUMBER OF PACKETS$N$

10b — VOICE PACKET$p(n)$

PACKET SELECTING PART ~18

FLAG GENERATING PART ~32

VOICE PACKET DETERMINING PART ~34

REPRODUCTION COMPLETION MESSAGE $msg$

REPRODUCTION CONTROL FLAG $F1$

VOICE EXISTENCE /ABSENCE DETERMINATION RESULT$uv(n)$

CONSTANCY $u(n)$

VOICE REPRODUCTION CONTROL PART ~36

BUFFER CONTROL INFORMATION

EP 1 826 959 B1

# FIG.8

REPRODUCTION BUFFER ~ 10

18 ~ PACKET SELECTING PART

10a

10b

NUMBER OF PACKETS $n$

VOICE PACKET $p(n)$

FLAG GENERATING PART ~ 42

VOICE PACKET DETERMINING PART ~ 44

REPRODUCTION COMPLETION MESSAGE $msg$

BUFFER INCREASE /DECREASE FLAG $F2$

PACKET DELETION REQUEST

VOICE EXISTENCE /ABSENCE DETERMINATION RESULT $uv(n)$

VOICE REPRODUCTION CONTROL PART ~ 46

BUFFER CONTROL INFORMATION

EP 1 826 959 B1

# FIG.9

REPRODUCTION BUFFER — 10

10a

10b — 18 PACKET SELECTING PART

NUMBER OF PACKETS $N$

VOICE PACKET $p(n)$

FLAG GENERATING PART — 52

VOICE PACKET DETERMINING PART — 54

REPRODUCTION COMPLETION MESSAGE $msg$

BUFFER INCREASE /DECREASE FLAG $F2$

PACKET DELETION REQUEST

VOICE EXISTENCE /ABSENCE DETERMINATION RESULT $uv(n)$

CONSTANCY $u(n)$

VOICE REPRODUCTION CONTROL PART — 56

BUFFER CONTROL INFORMATION

EP 1 826 959 B1

FIG.10

EP 1 826 959 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005238013 A
- US 6973425 B
- US 6961697 B
- JP 3397191 B
- US 2005157708 A
- JP 20060050789 B